# FASCICULE DE BREVET EUROPEEN

(11) **EP 1 315 606 B1**
(45) Date de publication et mention de la délivrance du brevet: **05.10.2005**
(21) Numéro de dépôt: 01958166.9
(22) Date de dépôt: 24.07.2001
(51) Int. Cl.: B29C 33/20, B29C 49/56

(54) **UNITE DE MOULAGE COMPORTANT UNE CHAMBRE DE COMPENSATION DELIMITEE PAR UNE MEMBRANE, MEMBRANE POUR UNE TELLE UNITE ET MACHINE MUNIE D'UNE TELLE UNITE**
GIESSEINHEIT MIT EINER MEMBRANBEGRENZTEN AUSGLEICHKAMMER, MEMBRAN FÜR EINE SOLCHE EINHEIT UND EINE MASCHINE MIT DIESER EINHEIT
MOULDING UNIT COMPRISING A COMPENSATING CHAMBER DELIMITED BY A MEMBRANE, MEMBRANE FOR SAME AND MACHINE EQUIPPED WITH SUCH A UNIT

(30) Priorité: 31.08.2000 FR 0011097
(43) Date de publication de la demande: 04.06.2003
(73) Titulaire: SIDEL, 76053 Le Havre Cedex (FR)
(72) Inventeur: BIANCHINI, Cédric c/o SIDEL, F-76053 LE HAVRE Cedex (FR)
(74) Mandataire: Siloret, Patrick
(86) Numéro de dépôt international: PCT/FR2001/002407
(87) Numéro de publication internationale: WO 2002/018115

(56) Documents cités:
- WO-A-00/53395
- WO-A-01/00387
- WO-A-98/13191
- FR-A- 2 659 265
- US-A- 3 829 264
- US-A- 5 411 391

## Description

L'invention se rapporte au domaine des unités de moulage sous pression, notamment pour les machines de moulage par soufflage d'articles en matériaux plastiques.

Généralement, les unités de moulage comportent deux parties qui sont mobiles l'une par rapport à l'autre entre une position de fermeture du moule et une position d'ouverture du moule dans laquelle il est possible d'extraire l'article qui vient d'être moulé. De plus chacune de ces parties de l'unité de moulage est souvent constituée d'au moins deux entités, à savoir un élément de support et un élément de moule. L'élément de support est lié de manière définitive à la machine tandis que l'élément de moule est amovible pour pouvoir être remplacé, au moins en partie, soit en cas d'usure du moule, soit au cas où l'on souhaite produire un article de forme différente.

Les deux parties sont en principe verrouillées l'une contre l'autre en position de fermeture. Dans cette position de fermeture, il est nécessaire que les deux parties du moule soient parfaitement en appui l'une contre l'autre pour assurer le respect de la forme de l'article moulé.

Or, surtout lorsque les deux parties mobiles de l'unité de moulage sont verrouillées l'une sur l'autre par un dispositif mécanique, les tolérances de fabrication et les jeux nécessaires au fonctionnement du mécanisme de verrouillage font que, sous l'effet de la pression nécessaire au moulage, les deux moules s'écartent légèrement l'un de l'autre.

Dans le document FR-A-2.659.265, il est décrit une unité de moulage en deux parties, chaque partie comportant un élément de support et un élément de moule. Les deux parties sont mobiles l'une par rapport à l'autre grâce au fait que les deux éléments de support sont articulés entre eux. L'un des éléments de moule est fixé rigidement sur le support associé tandis que le second élément est monté sur son support associé de manière à pouvoir se déplacer, sur une course déterminée, selon une direction sensiblement perpendiculaire au plan de joint des deux éléments de moule. Un joint d'étanchéité, qui suit une courbe fermée, est emprisonné entre deux faces en vis-à-vis de l'élément de moule mobile et de son support. Un système à ressorts assure que le joint reste serré quelle soit la position relative de l'élément de moule par rapport à son support. De la sorte, le joint délimite, avec les deux faces en vis-à-vis de l'élément de moule et de son support, une chambre fermée dans laquelle il est prévu de pouvoir injecter un fluide sous pression de manière à écarter l'élément de moule de son support. Lorsque les deux supports de moule sont verrouillés l'un à l'autre, on tend ainsi à plaquer avec une grande force les deux moitiés de moule l'une contre l'autre, sans leur laisser la possibilité de s'écarter. Ce système a montré son entière efficacité dans son application à des unités de soufflage destinées à des machines de soufflage de récipients en polyéthylène téréphtalate.

L'invention a cependant pour but d'apporter un perfectionnement à ce type d'unité de soufflage, notamment dans le but d'en augmenter l'efficacité en limitant la perte d'effort de compensation due à la présence des systèmes à ressorts qui maintiennent le joint d'étanchéité comprimé.

Dans ce but, l'invention propose une unité de moulage comportant, entre deux entités constituées par une portion de moule et son support, une chambre de compensation dans laquelle un fluide sous pression est injecté pour écarter la portion de moule de son support, caractérisée en ce que la chambre est délimitée par une membrane comportant un joint périphérique à lèvre, la membrane venant en appui contre l'une des entités et la lèvre du joint venant en appui étanche contre l'autre des entités.

Selon d'autres caractéristiques de l'unité de moulage selon l'invention :
- l'unité de moulage est réalisée en deux parties comprenant chacune un élément de moule porté par un support, et la chambre de compensation de pression est agencée entre au moins l'un des éléments de moule et le support associé pour pousser transversalement l'élément de moule d'une position reculée vers une position avancée, en direction de l'autre élément ;
- les deux entités associées comportent des faces actives en vis-à-vis qui sont agencées sensiblement en arc de cylindre et entre lesquelles la chambre de compensation est interposée de telle sorte que, sous pression, la lèvre est en appui contre une première des deux faces actives tandis que la membrane est plaquée contre la seconde face active ;
- la première face active présente, autour du périmètre de contact de la lèvre, un rebord en relief contre lequel le joint est susceptible de venir en appui vers l'extérieur sous l'effet de la surpression dans la chambre de compensation ;
- le joint est reçu dans une gorge aménagée dans la première face active ;
- une source de fluide sous pression débouche dans la face sur laquelle s'appuie la lèvre du joint, à l'intérieur du périmètre de contact de la lèvre ; et
- l'unité de moulage comporte plusieurs membranes disposées entre les deux mêmes entités pour créer plusieurs chambres de compensation de pression correspondant à différentes zones du moule.
Le document WO-A-98/13191 décrit une membrane pour une unité de moulage.

L'invention propose aussi une membrane pour une unité de moulage, caractérisée en ce qu'elle est pourvue sur son bord périphérique d'un joint à lèvre destiné à venir en appui contre une entité de l'unité de moulage, la membrane étant en appui contre une autre entité de l'unité de moulage pour délimiter, entre les deux éléments, une chambre de compensation de pression.

Selon d'autres caractéristiques de l'invention :
- la lèvre du joint périphérique de la membrane est repliée vers le centre de la membrane ;
- en section, le joint périphérique présente un profil sensiblement en V ou en U ;
- la membrane est réalisée en matériau souple étanche ;
- la membrane et le joint périphérique sont fabriqués en une seule pièce ;
- la membrane comporte une toile de renfort sur laquelle est surmoulé le matériau souple étanche ;
- la membrane présente une résistance à l'allongement sensiblement isotrope dans son plan ; et
- la toile de renfort présente un tissage tel que sa résistance à l'allongement est sensiblement identique quelle que soit la direction.

L'invention concerne enfin une machine de soufflage d'articles en matériau thermoplastique, caractérisée en ce qu'elle comporte au moins une unité de moulage incorporant l'une quelconque des caractéristiques précédentes.

D'autres caractéristiques et avantages de l'invention apparaîtront à la lecture de la description détaillée qui suit ainsi qu'à la vue des dessins annexés dans lesquels :
- la figure 1 est une vue schématique en coupe transversale d'une unité de moulage conforme aux enseignements de l'invention, l'unité étant représentée au repos ;

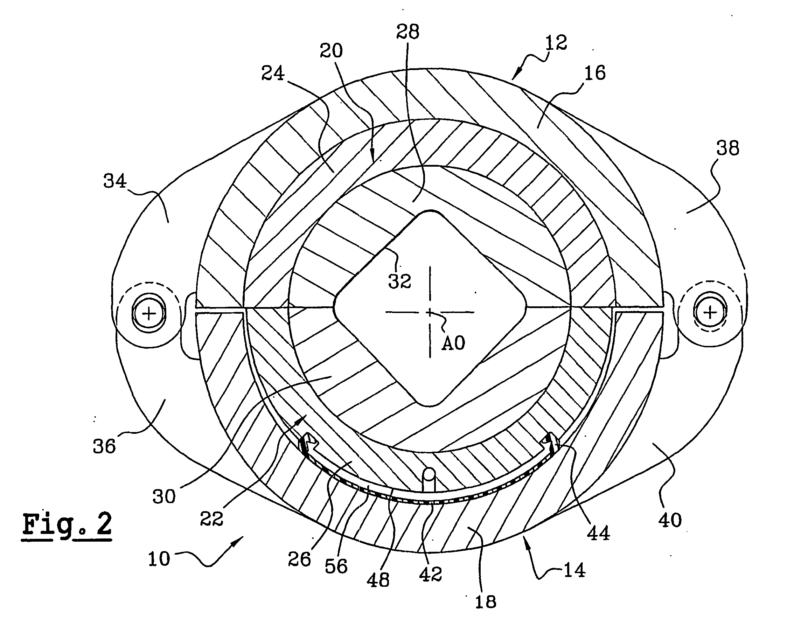

- la figure 2 est une vue schématique en coupe transversale de l'unité de moulage de la figure 1, l'unité étant représentée lorsque les moyens de compensation sont en action ;
- la figure 3 est une vue agrandie d'un détail de la figure 2 illustrant plus particulièrement les moyens de compensation et l'étanchéité réalisée par la lèvre du joint de la membrane selon l'invention ; et
- la figure 4 est une vue schématique en perspective éclatée d'une partie de l'unité de soufflage selon l'invention.

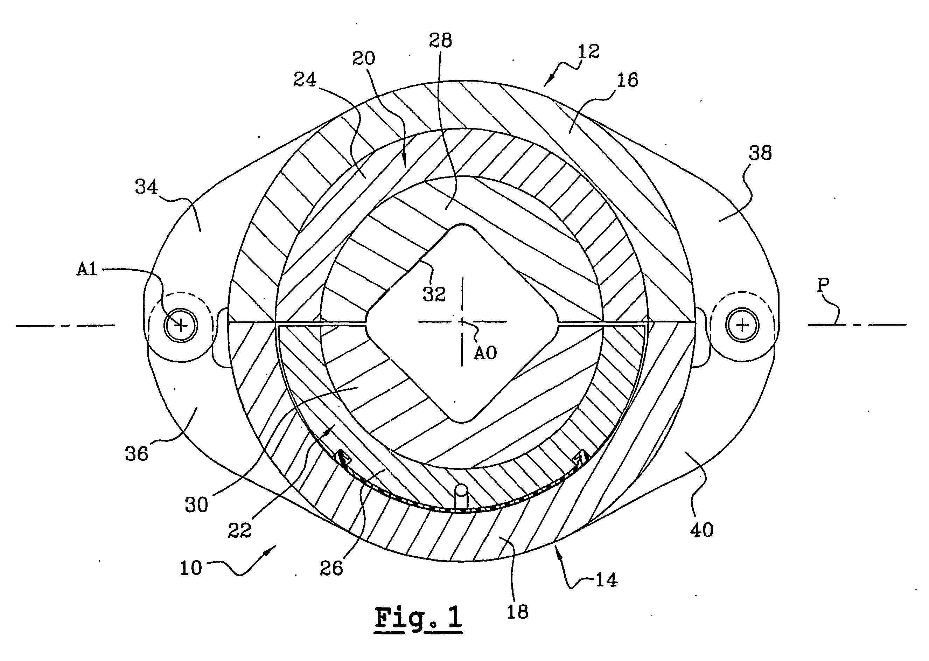

On a illustré sur la figure 1 une unité de moulage 10 qui est destinée par exemple à une machine de soufflage de récipients en matériau thermoplastique. Il pourrait par exemple s'agir d'une machine d'extrusion-soufflage ou d'une machine d'étirage-soufflage de préformes en PET préalablement injectées. Dans certains cas, l'invention pourra aussi être mise en oeuvre dans des unités de moulage de machines d'injection.

L'unité de moulage 10 est réalisée en deux parties 12, 14 qui sont articulées l'une par rapport à l'autre autour d'un axe A1. Chaque partie comporte un élément de support 16, 18 et un élément de moule 20, 22. Dans l'exemple illustré, les éléments de moule 20, 22 sont eux aussi réalisés sous la forme de deux pièces : un porte-coquille 24, 26 qui est lié au support associé, et une coquille 28, 30 qui est solidaire du porte-coquille et dans laquelle est formée l'empreinte 32 qui, une fois le moule fermé, détermine la forme de l'objet qui sera moulé. L'empreinte 32 est ici par exemple celle destinée à former un objet d'axe A0, correspondant à l'axe général de l'unité de moulage 10, et de section sensiblement carrée.

La construction des éléments de moule en deux parties, à savoir coquille et porte-coquille, permet par exemple d'aménager, à l'intérieur des porte-coquille, un réseau de circulation de fluide de refroidissement qui peut rester branché sur le circuit de refroidissement de la machine même lorsque l'on veut changer les coquilles qui portent l'empreinte déterminant la forme de l'article. Un dispositif de ce type est décrit en détail par exemple dans le document FR-A-2.733.176. Cependant, l'invention pourra aussi être mise en oeuvre avec des éléments de moule 20, 22 construits chacun en une seule pièce.

Dans l'exemple illustré, la forme générale des supports 16, 18, des porte-coquille 24, 26 et des coquilles 28, 30 est sensiblement celle de demi-tubes cylindriques de révolution emboîtés les uns dans les autres autour de leur axe commun A0. L'invention pourra bien entendu aussi être utilisée dans le cas d'unités de moulage de forme plus prismatique, comme celle illustrée dans le document FR-A-2.659.265.

Les deux parties 12, 14 de l'unité de moulage sont sensiblement symétriques l'une de l'autre par rapport au plan de joint P selon lequel les deux coquilles 28, 30 du moulé sont en appui l'une contre l'autre. Comme on peut le voir sur les figures, le plan de joint P contient l'axe A0, et l'axe A1 d'articulation des deux parties 12, 14 est contenu dans le prolongement du plan P. En effet, les deux supports 16, 18 comportent chacun des oreilles d'articulation 34, 36 qui s'étendent chacune dans un plan transversal aux axes A1 et A0 et qui se chevauchent en partie pour permettre le passage d'un arbre de liaison (non représenté) qui s'étend selon l'axe A1, de préférence sur toute la longueur axiale de l'unité de moulage.

De manière similaire, mais du côté opposé de l'unité de moulage par rapport à l'axe A0, les supports 16, 18 comportent chacun des oreilles de verrouillage 38, 40 qui s'étendent de manière à pouvoir être traversées par des organes de verrouillage (non représentés) mobiles selon un axe A2 parallèle aux axes A1 et A0. Un système de verrouillage de ce type est par exemple décrit dans le document FR-A-2.646.802.

Dans l'exemple illustré, l'un des éléments de moule 20, que l'on nommera élément de moule fixe, est solidaire du support associé 16 auquel il est fixé sans possibilité de mouvement, au contraire, l'autre élément de moule 22, que l'on nommera élément de moule mobile, est fixé sur son support associé 18 de manière à pouvoir coulisser radialement selon une direction sensiblement perpendiculaire au plan de joint P. Entre l'élément de moule mobile 22 et son support 18, il est prévu des moyens de compensation à pression de fluide qui permettent, lorsque l'unité de moulage est fermée et verrouillée, de repousser l'élément de moule mobile en direction de l'élément de moule fixe, de manière à plaquer les deux éléments de moule l'un contre l'autre le long de leur plan de joint.

Conformément aux enseignements de l'invention, les moyens de compensation comportent une membrane souple 42 qui est pourvue sur sa circonférence d'un joint à lèvre 44.

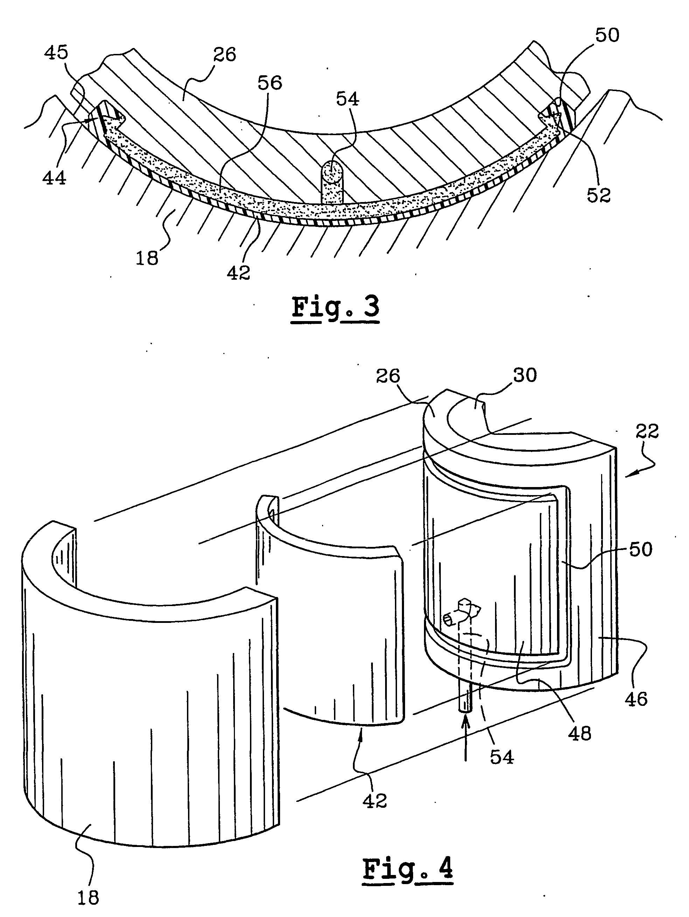

La membrane 42 est disposée entre la face interne en arc de cylindre concave 45 du support 18 et la face externe 46 en arc de cylindre convexe de l'élément de moule mobile 22, de sorte que, une fois en place dans l'unité de moulage, la membrane s'étend elle aussi selon un arc de cylindre. Comme un peut le voir sur les figures 3 et 4, la face externe 46 de l'élément de moule mobile 22 comporte un évidement 48 dont la profondeur correspond sensiblement à l'épaisseur de la membrane 42, ceci afin que la membrane ne gêne pas le mouvement relatif de l'élément de moule et de son support, et qu'elle ne soit pas écrasée entre les deux. Bien entendu, la forme de l'évidement 48 correspond à celle de la membrane 42 qui, à plat, présente dans le cas de figure illustré une forme rectangulaire à coins arrondis.

Autour de l'évidement 48, la face externe 46 de l'élément de moule 22 comporte une gorge 50 qui est prévue pour recevoir le joint 44 de la membrane 42. La gorge 50 suit ainsi un contour fermé correspondant à celui du joint 44 et correspondant à la forme de la membrane. La profondeur de la gorge 50 est ici supérieure à celle de l'évidement 48.

Comme on peut le voir sur les coupes, le joint 44 présente un profil à lèvre, la lèvre 52 étant repliée vers l'intérieur par rapport au plan de la membrane, c'est-à-dire repliée sensiblement vers le centre de la membrane. De manière schématique, le joint présente donc en section une forme de U ou de V ouvert vers le centre de la membrane. La lèvre 52 est prévue pour venir en appui contre la face externe 46 de l'élément de moule 22, plus précisément contre le fond de la gorge 50 aménagée dans cette face 46. La lèvre 52 est déformable, la pointe de la forme en V ou en U formant une sorte de charnière.

Par ailleurs, l'élément de moule mobile 22 comporte une canalisation 54, en l'occurrence creusée dans le porte-coquille 26, qui débouche dans l'évidement 48 de sa face externe 46, à l'intérieur du périmètre dessiné par la gorge 50, c'est-à-dire à l'intérieur de la surface de contact du joint 44 avec l'élément de moule 22. Cette canalisation 54 est prévue pour être reliée à une source de fluide sous pression (non représentée). Dans le cas d'une unité de moulage incorporée dans une machine de soufflage d'articles en matière thermoplastique, cette source de fluide sous pression sera avantageusement la même que celle qui est utilisée pour effectuer le soufflage de l'article, c'est-à-dire une source d'air sous pression.

La figure 1 illustre l'unité de moulage fermée, mais avant que la pression de moulage ne s'exerce à l'intérieur de la cavité délimitée par l'empreinte 32 du moule. De préférence, des moyens de rappel (non représentés) sont prévus pour que, en l'absence de pression dans la chambre de compensation 5.6, l'élément de moule mobile 22 soit plaqué contre son support 18. Toutefois, l'effort de rappel sera relativement faible et sera calculé uniquement pour éviter que l'élément de moule 22 ne ballotte par rapport au support 18 au moment de l'ouverture et de la fermeture de l'unité de moulage. Grâce à l'évidement 48 et à la gorge 50, ni la membrane 42 ni son joint 44 ne sont serrés entre l'élément de moule mobile 22 et son support 18. Eventuellement, on peut tout de même prévoir que le joint soit très légèrement serré entre le fond de la gorge 50 et la face interne 45 du support 18. Toutefois, ce serrage se traduira essentiellement par une légère déformation de la lèvre 52 du joint 44 de sorte que l'effort qui en résulte sera très faible. De manière générale, les moyens de compensation ne s'opposeront donc en aucun cas de manière significative à la fermeture de l'unité de moulage.

Une fois l'unité de moulage fermée, il est alors possible d'injecter, par la canalisation 54, du fluide sous pression dans la chambre 56 qui est délimitée par le joint 44, la membrane 42 et par la surface de l'évidement 48 de la face externe 46 de l'élément de moule 22. Sous l'effet de la surpression qui apparaît dans cette chambre 56, le joint 44 se déforme de telle sorte que sa lèvre 52 est plaquée au fond de la gorge 50, tandis que la partie du joint qui est liée à la membrane 42 se plaque, tout comme la membrane 42, contre la face interne 45 du support 18. Le joint à lèvre 44 se déplie ainsi pour assurer une étanchéité parfaite de la chambre 56, en dépit du fait que, sous l'effet de la pression dans la chambre 56, l'élément de moule 22 s'écarte légèrement de son support 18. La présence de la gorge 50 peut notamment éviter que le joint 44 ne se déforme trop radialement sous l'effet de la pression. Cela permet notamment d'éviter l'obligation de le renforcer par une armature interne.

Bien entendu, le mécanisme de verrouillage des supports et la déformation éventuelle de ces supports ne permettant qu'un écartement relativement faible, la pression dans la chambre 56 tend alors plaquer avec une très grande force l'élément de moule mobile 22 contre l'élément de moule fixe 20, de telle sorte qu'il ne se produit aucun décollement des deux éléments de moule au niveau de leur plan de joint.

De préférence, la membrane 42 et son joint à lèvre 44 sont réalisés en une seule pièce par moulage d'une matière souple et étanche telle que le silicone. Bien entendu, d'autres matériaux polymères peuvent être utilisés, par exemple un polyuréthane.

La membrane peut par exemple être renforcée par une toile textile qui est alors surmoulée par le silicone. Avantageusement, la toile sera choisie de manière à présenter une résistance aux efforts de traction qui est sensiblement uniforme dans toutes les directions, ceci notamment afin d'éviter une déformation trop importante de la membrane au niveau de ses coins. Un exemple d'une toile présentant de telles caractéristiques peut être trouvé dans les documents US-A-5.351.722 ou EP-A-0.263.392.

Dans l'exemple qui vient d'être décrit, la membrane vient en appui contre le support tandis que la lèvre du joint s'appuie contre l'élément de moule. Bien entendu, par pure inversion mécanique, on pourrait disposer la membrane de telle sorte qu'elle s'appuie contre l'élément de moule tandis que la lèvre du joint viendrait en appui contre le support. Il faudra alors prévoir que la canalisation d'alimentation en fluide sous pression débouche non pas dans la face externe de l'élément de moule mais dans la face interne du support.

Dans l'exemple illustré, l'unité de moulage ne comporte qu'une seule chambre de compensation. De préférence, cette chambre de compensation sera dimensionnée de telle sorte que sa surface projetée sur le plan de joint soit supérieure à la surface projetée de la cavité délimitée par le moule. De la sorte, même si la pression utilisée pour le moulage de l'article et pour la compensation sont identiques, la force de serrage des deux éléments de moule, qui est développée par la chambre de compensation, sera supérieure à la force d'écartement développée par le moulage de l'article.

Bien évidemment, l'invention pourra être mise en oeuvre avec une membrane de forme différente de celle représentée. Dans le cas d'une unité de moulage de bouteilles, la surface projetée de la chambre de compensation pourra être inférieure au niveau du col de la bouteille en comparaison de la surface en regard du corps de la bouteille. De même, on peut prévoir de disposer non pas une seule chambre de compensation, mais plusieurs chambres, chacune réalisée selon le principe de l'invention, ces chambres étant réparties et éventuellement reliées à des sources de fluide sous pression différentes.

De même, rien n'empêche que les deux parties d'une unité de moulage soient munies chacune de moyens de compensation de pression conformes aux enseignements de l'invention.

## Revendications

1. Unité de moulage comportant, entre deux entités constituées par un élément de moule (22) et son support (18), une chambre de compensation (56) dans laquelle un fluide sous pression est injecté pour écarter l'élément de moule (22) de son support (18), **caractérisée en ce que** la chambre (56) est délimitée par une membrane (42) comportant un joint périphérique (44) à lèvre (52), la membrane (42) venant en appui contre l'une des entités (22, 18) et la lèvre (52) du joint (44) venant en appui étanche contre l'autre des entités (18, 22).

2. Unité de moulage selon la revendication 1, **caractérisée en ce qu'**elle est réalisée en deux parties comprenant chacune un élément de moule (20, 22) porté par un support (16, 18), et **en ce que** la chambre de compensation de pression (56) est agencée entre au moins l'un des éléments de moule (22) et le support (18) associé pour pousser transversalement l'élément de moule (22) d'une position reculée vers une position avancée, en direction de l'autre élément (14).

3. Unité de moulage selon l'une des revendications 1 ou 2, **caractérisée en ce que** les deux entités associées (18, 22) comportent des faces actives (45, 46) en vis-à-vis qui sont agencées sensiblement en arc de cylindre et entre lesquelles la chambre de compensation (56) est interposée de telle sorte que, sous pression, la lèvre (52) est en appui contre une première (46, 50) des deux faces actives tandis que la membrane (42) est plaquée contre la seconde face active (45).

4. Unité de moulage selon la revendication 3, **caractérisée en ce que** la première face active (46) présente, autour du périmètre de contact de la lèvre (52), un rebord en relief (50) contre lequel le joint (44) est susceptible de venir en appui vers l'extérieur sous l'effet de la surpression dans la chambre de compensation (56).

5. Unité de moulage selon la revendication 4, **caractérisée en ce que** le joint (44) est reçu dans une gorge (50) aménagée dans la première face active (46).

6. Unité de moulage selon l'une quelconque des revendications 3 à 5, **caractérisée en ce qu'**une source de fluide sous pression (54) débouche dans la face (48, 46) sur laquelle s'appuie la lèvre (52) du joint (44), à l'intérieur du périmètre de contact de la lèvre (52).

7. Unité de moulage selon l'une quelconque des revendications précédentes, **caractérisée en ce qu'**elle comporte plusieurs membranes disposées entre les deux mêmes entités pour créer plusieurs chambres de compensation de pression correspondant à différentes zones du moule.

8. Unité de moulage selon l'une quelconque des revendications précédentes, **caractérisée en ce que** la lèvre (52) du joint périphérique (44) de la membrane (42) est repliée vers le centre de la membrane (42).

9. Unité de moulage selon la revendication 8, **caractérisée en ce que**, en section, le joint périphérique (44) présente un profil sensiblement en V ou en U.

10. Unité de moulage selon l'une quelconque des revendications précédentes, **caractérisée en ce que** la membrane (42) est réalisée en matériau souple étanche.

11. Unité de moulage selon l'une quelconque des revendications précédentes, **caractérisée en ce que** la membrane (42) et le joint périphérique (44) sont fabriqués en une seule pièce.

12. Unité de moulage selon l'une des revendications 10 ou 11, **caractérisée en ce que** la membrane (42) comporte une toile de renfort sur laquelle est surmoulé le matériau souple étanche.

13. Unité de moulage selon l'une quelconque des revendications précédentes, **caractérisée en ce que** la membrane (42) présente une résistance à l'allongement sensiblement isotrope dans son plan.

14. Unité de moulage selon les revendications 12 et 13 prises en combinaison, **caractérisée en ce que** la toile de renfort présente un tissage tel que sa résistance à l'allongement est sensiblement identique quelle que soit la direction.

15. Membrane pour une unité de moulage, **caractérisée en ce qu'**elle est pourvue sur son bord périphérique d'un joint à lèvre (44) destiné à venir en appui contre une entité de l'unité de moulage, la membrane (42) étant en appui contre une autre entité de l'unité de moulage pour délimiter, entre les deux entités, une chambre de compensation de pression (56).

16. Membrane selon la revendication 15, **caractérisée en ce que** la lèvre (52) du joint périphérique (44) de la membrane (42) est repliée vers le centre de la membrane.

17. Membrane selon la revendication 16, **caractérisée en ce que**, en section, le joint périphérique présente un profil sensiblement en V ou en U.

18. Membrane selon l'une quelconque des revendications 15 à 17, **caractérisée en ce que** la membrane (42) est réalisée en matériau souple étanche.

19. Membrane selon la revendication 18, **caractérisée en ce que** la membrane (42) et le joint périphérique (44) sont fabriqués en une seule pièce.

20. Membrane selon l'une des revendications 18 ou 19, **caractérisée en ce qu'**elle comporte une toile de renfort sur laquelle est surmoulé le matériau souple étanche.

21. Membrane selon l'une quelconque des revendications 15 à 20, **caractérisée en ce qu'**elle présente une résistance à l'allongement sensiblement isotrope dans son plan.

22. Membrane selon les revendications 20 et 21 prises en combinaison, **caractérisée en ce que** la toile de renfort présente un tissage tel que sa résistance à l'allongement est sensiblement identique quelle que soit la direction.

23. Machine de soufflage d'articles en matériau thermoplastique, **caractérisée en ce qu'**elle comporte au moins une unité de moulage selon l'une quelconque des revendications 1 à 14.

## Patentansprüche

1. Formeinheit, die zwischen zwei Entitäten bestehend aus einem Formelement (22) und seinem Träger (18) eine Ausgleichskammer (56) umfasst, in welche ein Fluid unter Druck eingespritzt wird, um das Formelement (22) von seinem Träger (18) zu spreizen, **dadurch gekennzeichnet, dass** die Ausgleichskammer (56) durch eine Membran (42) abgegrenzt ist, die eine Umkreisdichtung (44) mit Lippe (52) umfasst, wobei die Membran (42) gegen eine der Entitäten (22, 18) zur Auflage kommt, und die Lippe (52) der Dichtung (44) zur dichten Auflage gegen die anderen Entitäten (18, 22) kommt.

2. Formeinheit nach Anspruch 1, **dadurch gekennzeichnet, dass** sie aus zwei Teilen hergestellt ist, die jeder ein Formelement (20, 22) umfassen, das von einem Träger (16, 18) getragen wird, und **dadurch**, dass die Druckausgleichskammer (56) zwischen mindestens einem der Elemente der Form (22) und dem zugehörigen Träger (18) eingerichtet ist, um das Formelement (22) transversal von einer zurückgeschobenen Stellung zu einer vorgeschobenen Stellung in Richtung des anderen Elements (14) zu schieben.

3. Formeinheit nach einem der Ansprüche 1 oder 2, **dadurch gekennzeichnet, dass** die zwei zugehörigen Entitäten (18, 22) aktive Seiten (45, 46) einander gegenüberliegend umfassen, die im Wesentlichen im Zylinderbogen angeordnet sind, und zwischen welchen die Ausgleichskammer (56) so eingefügt ist, dass die Lippe (52) unter Druck gegen eine erste (46, 50) der zwei aktiven Seiten anliegt, während die Membran (42) gegen die zweite aktive Seite (45) gedrückt ist.

4. Formeinheit nach Anspruch 3, **dadurch gekennzeichnet, dass** die erste aktive Seite (46) um den Berührungsumkreis der Lippe (52) eine Reliefkante (50) aufweist, gegen welche die Dichtung (44) unter der Einwirkung des Überdrucks in der Ausgleichskammer (56) zur Auflage nach außen zum Aufliegen kommen kann.

5. Formeinheit nach Anspruch 4, **dadurch gekennzeichnet, dass** die Dichtung (44) in einer Hohlkehle (50) aufgenommen ist, die in der ersten aktiven Seite (46) eingerichtet ist.

6. Formeinheit nach einem der Ansprüche 3 bis 5, **dadurch gekennzeichnet, dass** eine Quelle von Fluid unter Druck (54) in die Seite (48, 46) mündet, auf welche sich die Lippe (52) der Dichtung (44) im Inneren des Berührungsumkreises der Lippe (52) anlegt.

7. Formeinheit nach einem der vorhergehenden Ansprüche, **dadurch gekennzeichnet, dass** sie mehrere Membranen umfasst, welche zwischen den zwei gleichen Entitäten angeordnet sind, um mehrere Druckausgleichskammern zu schaffen, die verschiedenen Zonen der Form entsprechen.

8. Formeinheit nach einem der vorhergehenden Ansprüche, **dadurch gekennzeichnet, dass** die Lippe (52) der Umkreisdichtung (44) der Membran (42) zu der Mitte der Membran (42) zurückgefaltet ist.

9. Formeinheit nach Anspruch 8, **dadurch gekennzeichnet, dass** die Umkreisdichtung (44) im Querschnitt ein im Wesentlichen V- oder U-förmiges Profil aufweist.

10. Formeinheit nach einem der vorhergehenden Ansprüche, **dadurch gekennzeichnet, dass** die Membran (42) aus dichtem biegsamem Werkstoff hergestellt ist.

11. Formeinheit nach einem der vorhergehenden Ansprüche, **dadurch gekennzeichnet, dass** die Membran (42) und die Umkreisdichtung (44) aus einem einzigen Stück hergestellt sind.

12. Formeinheit nach einem der Ansprüche 10 oder 11, **dadurch gekennzeichnet, dass** die Membran (42) ein Verstärkungsleinen umfasst, auf welches der biegsame dichte Werkstoff abgeformt ist.

13. Formeinheit nach einem der vorhergehenden Ansprüche, **dadurch gekennzeichnet, dass** die Membran (42) einen im Wesentlichen in ihrer Ebene isotropen Dehnungswiderstand aufweist.

14. Formeinheit nach einem der Ansprüche 12 und 13 kombiniert genommen, **dadurch gekennzeichnet, dass** das Verstärkungsleinen eine Webweise aufweist, so dass sein Dehnungswiderstand im Wesentlichen ungeachtet der Richtung gleich ist.

15. Membran für eine Formeinheit, **dadurch gekennzeichnet, dass** sie an ihrem Umkreisrand mit einer Lippendichtung (44) versehen ist, die dazu bestimmt ist, gegen eine Entität der Formeinheit zum Aufliegen zu kommen, wobei die Membran (42) gegen eine andere Entität der Formeinheit aufliegt, um zwischen den zwei Entitäten eine Druckausgleichskammer (56) abzugrenzen.

16. Membran nach Anspruch 15, **dadurch gekennzeichnet, dass** die Lippe (52) der Umkreisdichtung (44) der Membran (42) zu der Mitte der Membran zurückgefaltet ist.

17. Membran nach Anspruch 16, **dadurch gekennzeichnet, dass** die Umkreisdichtung im Querschnitt ein im Wesentlichen V- oder U-förmiges Profil aufweist.

18. Membran nach einem der Ansprüche 15 bis 16, **dadurch gekennzeichnet, dass** die Membran (42) aus dichtem biegsamem Werkstoff hergestellt ist.

19. Membran nach Anspruch 18, **dadurch gekennzeichnet, dass** die Membran (42) und die Umkreisdichtung (44) aus einem einzigen Teil hergestellt sind.

20. Membran nach einem der Ansprüche 18 oder 19, **dadurch gekennzeichnet, dass** sie ein Verstärkungsleinen umfasst, auf welches der dichte geschmeidige Werkstoff abgeformt ist.

21. Membran nach einem der Ansprüche 15 bis 20, **dadurch gekennzeichnet, dass** sie einen in ihrer Ebene im Wesentlichen isotropen Dehnungswiderstand aufweist.

22. Membran nach den Ansprüchen 20 und 21 kombiniert genommen, **dadurch gekennzeichnet, dass** das Verstärkungsleinen eine Webweise aufweist, so dass sein Dehnungswiderstand im Wesentlichen ungeachtet der Richtung gleich ist.

23. Maschine zum Blasen von Artikeln aus Thermoplastwerkstoff, **dadurch gekennzeichnet, dass** sie mindestens eine Formeinheit gemäß einem der Ansprüche 1 bis 14 umfasst.

## Claims

1. Moulding unit comprising, between two entities consisting of a mould element (22) and its support (18), a compensating chamber (56) into which a pressurized fluid is injected to separate the mould element (22) from its support (18), **characterized in that** the chamber (56) is delimited by a membrane (42), comprising a peripheral seal (44) of the lip (52) type, the membrane (42) coming to bear against one of the entities (22, 18) and the lip (52) of the seal (44) coming to bear in a sealed manner against the other of the entities (18, 22).

2. Moulding unit according to Claim 1, **characterized in that** it is made in two parts each one comprising a mould element (20, 22) borne by a support (16, 18) and **in that** the pressure-compensating chamber (56) is arranged between at least one of the mould elements (22) and the associated support (18) so as to push the mould element (22) transversely from a retreated position to a forward position, towards the other element (14).

3. Moulding unit according to one of Claims 1 or 2, **characterized in that** the two associated entities (18, 22) comprise opposing active faces (45, 46) which are arranged more or less in the form of an arc of a cylinder and between which the compensating chamber (56) is inserted so that, under pressure, the lip (52) presses against a first (46, 50) of the two active faces while the membrane (42) is pressed firmly against the second active face (45).

4. Moulding unit according to Claim 3, **characterized in that** first active face (46) has, around the contact perimeter of the lip (52), a rim (50) in relief against which the seal (44) is likely to bear towards the outside under the effect of the raised pressure in the compensating chamber (56).

5. Moulding unit according to Claim 4, **characterized in that** the seal (44) is housed in a grove (50) formed in the first active face (46).

6. Moulding unit according to any one of Claims 3 to 5, **characterized in that** a source of pressurized fluid (54) opens into the face (48, 46) against which the lip (52) of the seal (44) presses, inside the contact perimeter of the lip (52).

7. Moulding unit according to any one of the preceding claims, **characterized in that** it comprises several membranes arranged between the two same entities to create several pressure-compensating chambers corresponding to different regions of the mould.

8. Moulding unit according to any one of the preceding claims, **characterized in that** the lip (52) of the peripheral seal (44) of the membrane (42) is folded back towards the centre of the membrane (42).

9. Moulding unit according to Claim 8, **characterized in that**, in cross section, the peripheral seal (44) has a more or less V-shaped or U-shaped profile.

10. Moulding unit according to any one of the preceding claims, **characterized in that** the membrane (42) is made of impervious flexible material.

11. Moulding unit according to any one of the preceding claims, **characterized in that** the membrane (42) and the peripheral seal (44) are manufactured as a single piece.

12. Moulding unit according to one of Claims 10 and 11, **characterized in that** the membrane (42) comprises a reinforcing fabric onto which the impervious flexible material is overmoulded.

13. Moulding unit according to any one of the preceding claims, **characterized in that** the membrane (42) has more or less isotropic resistance to elongation within its plane.

14. Moulding unit according to Claims 12 and 13 taken in combination, **characterized in that** the reinforcing fabric has a weave such that its resistance to elongation is more or less identical irrespective of the direction.

15. Membrane for a moulding unit, **characterized in that** it is provided on its peripheral edge with a lip seal (44) intended to bear against an entity of the moulding unit, the membrane (42) bearing against another entity of the moulding unit so as to delimit, between the two entities, a pressure-compensating chamber (56).

16. Membrane according to Claim 15, **characterized in that** the lip (52) of the peripheral seal (44) of the membrane (42) is folded back towards the centre of the membrane.

17. Membrane according to Claim 16, **characterized in that**, in cross section, the peripheral seal has a more or less V-shaped or U-shaped profile.

18. Membrane according to any one of Claims 15 to 17, **characterized in that** the membrane (42) is made of impervious flexible material.

19. Membrane according to Claim 18, **characterized in that** the membrane (42) and the peripheral seal (44) are manufactured as a single piece.

20. Membrane according to one of Claims 18 or 19, **characterized in that** it comprises a reinforcing fabric onto which the impervious flexible material is overmoulded.

21. Membrane according to any one of Claims 15 to 20, **characterized in that** it has more or less isotropic resistance to elongation within its plane.

22. Membrane according to Claims 20 and 21 taken in combination, **characterized in that** the reinforcing fabric has a weave such that its resistance to elongation is more or less identical irrespective of the direction.

23. Machine for blow-moulding thermoplastic items, **characterized in that** it comprises at least one moulding unit according to any one of Claims 1 to 14.
